# EUROPEAN PATENT APPLICATION

(11) **EP 2 407 717 A1**
(43) Date of publication of application: **18.01.2012**
(21) Application number: 09841410.5
(22) Date of filing: 26.06.2009
(51) Int. Cl.: F23G 5/24, F23G 5/44, F23G 5/46, F23L 7/00, F23L 15/00

(54) **METHOD OF BLOWING COMBUSTIBLE DUST INTO WASTE MELTING FURNACE**

(30) Priority: 11.03.2009 JP 2009058253
(71) Applicant: Nippon Steel Engineering Co., Ltd, Tokyo 100-8071 (JP)
(72) Inventor: YOSHIMOTO, Yuichi, Kitakyushu-shi Fukuoka 804-8505 (JP); KOBAYASHI, Atsushi, Kitakyushu-shi Fukuoka 804-8505 (JP); KATO, Yasuhiko, Kitakyushu-shi Fukuoka 804-8505 (JP)
(74) Representative: Carvajal y Urquijo, Isabel
(86) International application number: PCT/JP2009/002945
(87) International publication number: WO 2010/103578

(57) **Abstract**

It is an object to enhance the combustion characteristics of combustible dusts to be blown into a waste melting furnace. A meting furnace (1) with a coke bed (1a) that melts a waste product fed into the melting furnace together with coke and limestone; a tuyere (8) through which the combustible dusts and air are blown toward the coke bed after the combustible dusts and the air are mixed with each other; and preheating means (9) for preheating the air to be supplied to the tuyere.

## Description

### TECHNICAL FIELD

The present invention relates to a method for blowing combustible dusts and air toward a coke bed in a waste melting furnace that performs melting of waste products.

### BACKGROUND ART

A method for disposing of waste products including general waste products and industrial waste products may include drying, thermaldecomposition, combustion,and melting of the waste products in a shaft-furnace type waste melting furnace.

More specifically, a waste product is fed together with coke and limestone as subsidiary materials through a feeding hole provided at the top of the waste melting furnace. The waste product fed into the melting furnace is subjected to drying, thermal decomposition, combustion, and melting in the melting furnace. Gas generated in the melting furnace is discharged through the top of the melting furnace to be guided to a combustion chamber, and is burned completely in the combustion chamber. Combustion exhaust gas is guided to a boiler to recover heat energy from the combustion exhaust gas.

Reduction in the amount of coke usage has been desired in the aforementioned melting of waste products. In response, in the technique disclosed in Patent Literature 1, combustible dusts collected from the gas generated in a waste melting furnace are blown together with air at ordinary temperature through a blower tuyere toward a coke bed in the melting furnace. This allows the combustible dusts to take the place of part of coke forming the coke bed, so that the amount of coke usage can be reduced.

### CITATION LIST

### PATENT LITERATURES

Patent Literature 1: Japanese Patent Application Laid-Open No. 2001-21123

### SUMMARY OF INVENTION

### PROBLEMS TO BE SOLVED BY INVENTION

The technique disclosed in Patent Literature 1 may find it impossible to burn combustible dusts sufficiently. Insufficient combustion of the combustible dusts makes it difficult for the combustible dusts to take the place of coke, so that the amount of coke usage is hard to reduce.

Thus, it is an object of the present invention to provide a method for blowing combustible dusts capable of enhancing the combustion characteristics of the combustible dusts to be blown into a waste melting furnace.

### MEANS FOR SOLVING THE PROBLEMS

According to a method for blowing combustible dusts of a first invention of the present application, preheated air and combustible dusts are blown through a tuyere after the preheated air and the combustible dusts are mixed with each other toward a coke bed in a melting furnace that melts a waste product fed into the melting furnace together with coke and limestone.

The air to be supplied to the tuyere can be heated with heat generated in a waste melting facility that performs heat recovery by burning a combustible material discharged from the melting furnace. This eliminates the need to provide a heat source dedicated to preheating of air.

More specifically, the air to be supplied to the tuyere can be heated with steam generated in a boiler during the heat recovery. After the air to be supplied to the tuyere is heated with a combustion exhaust gas which is generated by combustion of the combustible material and from which heat has been recovered, the air is heated with steam generated in the boiler during the heat recovery. After the air to be supplied to the tuyere is heated by being brought into contact with an outer wall surface of the melting furnace, the air can also be heated with steam generated in the boiler during the heat recovery.

It is preferable that the air to be supplied to the tuyere be heated to a temperature in a range of from 200 to 400°C, as this can increase the rate of the combustible dusts that can take the place of coke among all the combustible dusts. It is also preferable that a flow rate of the air (containing the combustible dusts) at a tip end of the tuyere be set to fall within a range of from 20 to 200 [m/s], as this allows efficient melting of a waste product in the melting furnace.

Fuel for making combustible dusts ignite and oxygen for the combustion of the fuel can be blown toward the coke bed together with the combustible dusts and the preheated air. The combustion of the fuel makes it possible to burn the combustible dusts easily. The combustible dusts may be dusts contained in a material discharged from the melting furnace.

A waste melting facility of a second invention of the present application includes: a melting furnace with a coke bed that melts a waste product fed into the melting furnace together with coke and limestone; a tuyere through which combustible dusts and air are blown toward the coke bed after the combustible dusts and the air are mixed with each other; and preheating means for preheating the air to be supplied to the tuyere. Herein, any member that can perform preheating described in the first invention of the present application as above can be employed as the preheating means.

The tuyere may include an inner tube, a middle tube, and an outer tube. The inner tube forms a space in which air and combustible dusts move. The middle tube is disposed outside the inner tube. The middle tube forms a space, inwhich fuel for making the combustible dusts ignite moves, between the middle tube and the inner tube. The outer tube is disposed outside the middle tube. The outer tube forms a space, in which oxygen for combustion of the fuel moves, between the outer tube and the middle tube.

### ADVANTAGEOUS EFFECTS OF INVENTION

According to the present invention, air is preheated that is to be blown toward the coke bed in the melting furnace together with combustible dusts, so that the temperature of the combustible dusts can be increased before the combustible dusts reach the melting furnace. Increasing the temperature of the combustible dusts can shorten time for the temperature of the combustible dusts to reach an ignition temperature in the melting furnace, thereby enhancing the combustion characteristics of the combustible dusts. As a result, the quantity of the combustible dusts to take the place of coke can be increased while the amount of coke usage can be reduced.

### BRIEF DESCRIPTION OF DRAWINGS

Fig. 1 is a schematic view showing the structure of a waste melting facility in a first embodiment of the present invention.
Fig. 2 is a schematic view showing the structure of a blower tuyere in the first embodiment.
Fig. 3 is a schematic view showing the structure of a blower tuyere in a modification of the first embodiment.
Fig. 4 is a diagram showing a relationship between the preheat temperature of air and the replacement rate of the combustible dusts.
Fig. 5 is a schematic view showing the structure of a waste melting facility in a second embodiment of the invention.
Fig. 6 is a schematic view showing the structure of a waste melting facility in a third embodiment of the invention.
Fig. 7 is a schematic view showing a jacket structure in the third embodiment.
Fig. 8 is a schematic view showing the structure of a blower tuyere in a fourth embodiment of the present invention.

### EMBODIMENT(S) FOR CARRYING OUT INVENTION

Embodiments of the present invention will be described below.

### First Embodiment

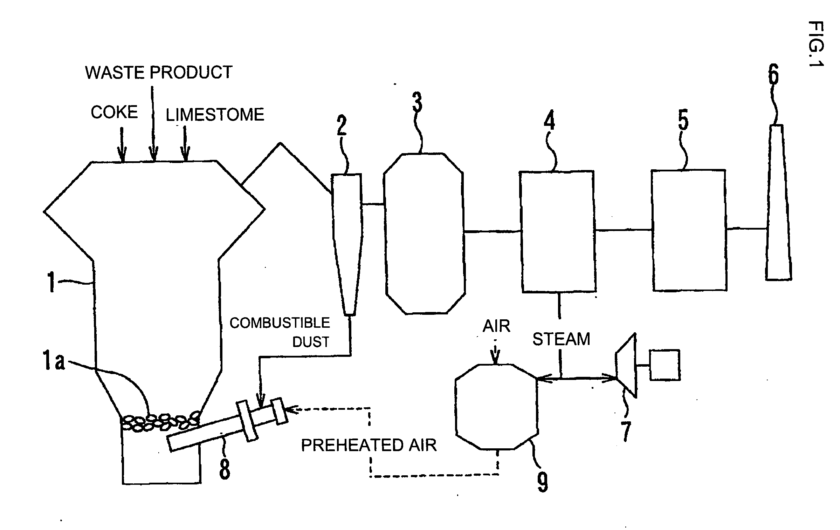

Awaste melting facility of a first embodiment of the invention will be described with reference to Fig. 1. Fig. 1 is a schematic view showing the structure of the waste melting facility.

A waste melting furnace (hereinafter simply called melting furnace) 1 is provided with a feeding hole at an upper portion thereof through which a waste product is fed together with coke and limestone as subsidiary materials. A waste product in the melting furnace 1 is subjected to drying, thermal decomposition, combustion, and melting. Gas generated in the melting furnace 1 is discharged through the upper portion of the melting furnace 1, and is then supplied to a collecting unit 2. The collecting unit 2 collects combustible dusts contained in the gas, and the collected combustible dusts are supplied to a blower tuyere 8 described later.

The gas havingpassed the collecting unit 2 is burned completely in a combustion chamber 3, and is then supplied as combustion exhaust gas to a boiler 4. Heat energy is recovered from the combustion exhaust gas in the boiler 4, and the combustion exhaust gas from which heat has been recovered is supplied to an exhaust gas processing unit 5. The exhaust gas processing unit 5 removes dusts and others from the combustion exhaust gas with a filter. The combustion exhaust gas filtered in the exhaust gas processing unit 5 is discharged to the atmosphere through a chimney 6.

The boiler 4 exchanges heat with the combustion exhaust gas to generate steam, and the generated steam is supplied to a steam turbine 7 and a preheater 9. The steam turbine 7 can generate power by using the steam supplied to the steam turbine 7.

The preheater 9 transfers the heat energy of the steam to air to heat the air. This air may be air in the atmosphere, or oxygen-enriched air. The oxygen-enriched air is air the oxygen content of which is higher than that of air in the atmosphere (generally 20%).

The air having been heated in the preheater 9 is supplied through a duct (not shown) to the blower tuyere 8. Thus, the combustible dusts from the collecting unit 2 and the air from the preheater 9 are mixed in the blower tuyere 8, and are then blown toward a coke bed 1a in the melting furnace 1.

According to the present embodiment, the combustible dusts and the preheated air are mixed in the blower tuyere 8. This causes heat exchange to occur between the air and the combustible dusts to increase the temperature of the combustible dusts. Accordingly, the temperature of the combustible dusts is allowed to reach an ignition temperature in shorter time, so that the combustion efficiency of the combustible dusts is enhanced.

The enhanced combustion efficiency of the combustible dusts can increase the quantity of the combustible dusts that can take the place of coke, leading to reduction in the amount of coke usage in the melting furnace 1. Using the combustible dusts in place of coke is called replacement by the combustible dusts. Further, the rate of the combustible dusts that can take the place of coke is called a replacement rate of the combustible dusts.

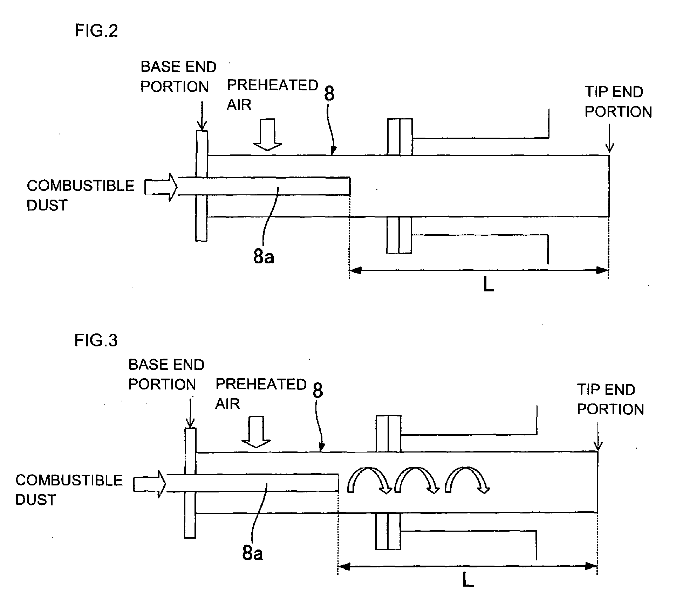

The structure of the blower tuyere 8 is shown in Fig. 2. A nozzle 8a is fixed to the base end portion of the blower tuyere 8. The combustible dusts from the collecting unit 2 are blown into the blower tuyere 8 through the nozzle 8a. The combustible dusts from the collecting unit 2, and carrying air for carrying the combustible dusts are supplied to the nozzle 8a. The combustible dusts and the carrying air are discharged through the tip end portion of the nozzle 8a. Preheated air is supplied from the preheater 9 to the blower tuyere 8, so that the combustible dusts ejected through the tip end portion of the nozzle 8a are mixed with the preheated air.

The temperature of the combustible dusts can be increased efficiently if the combustible dusts and preheated air are mixed well in the blower tuyere 8, leading to enhanced combustion efficiency of the combustible dusts in the melting furnace 1.

If the flow rate of air (containing the combustible dusts) in the blower tuyere 8 is set at 100 [m/s], for example, a distance L between the tip end portions of the nozzle 8a and the blower tuyere 8 is preferably 1000 [mm] or more. The reason therefor is that such setting ensures time for the combustible dusts and the preheated air to stay in the blower tuyere 8, so that the combustible dusts and the preheated air can be mixed with each other well.

It is preferable that time from when the combustible dusts and the preheated air start to mix to when the combustible dusts and the preheated air are ejected through the blower tuyere 8 be the same as time to ensure a rise of the temperature of the combustible dusts to a predetermined temperature. Specifically, at least 0.01 seconds are preferably maintained as the above-mentioned time.

Meanwhile, the combustible dusts may be caused to move toward the tip end portion of the blower tuyere 8 while traveling along the inner circumference surface of the blower tuyere 8 as shown by arrows of Fig. 3. This circling movement of the combustible dusts in the blower tuyere 8 allows the combustible dusts and the preheated air to be mixed with each other with enhanced efficiency.

In order to suppress wearing out to be caused by the combustible dusts and others, it is preferable that the inner circumference surface of the blower tuyere 8 be subjected to a surface treatment such as calorizing. It is preferable that the inner circumference surface of the blower tuyere 8 be subjected to the surface treatment especially in a region covering the distance L.

It is preferable that the temperature of the air having been heated in the preheater 9 (preheat temperature) be from 200°C or more to 400°C or less.

The following issues are important to reduce the amount of coke by using the combustible dusts.

First, the combustible dusts having been blown into the melting furnace 1 should be burned before coke is caused to be burned. Second, the combustible dusts should be burned while they pass through a layer of the coke bed. Time for combustible dusts to pass through the layer of the coke bed is about 0.5 seconds specifically.

The temperature of coke in the melting furnace 1 is sufficiently high. Accordingly, coke is burned rapidly when the air that has been blown through the blower tuyere 8 reaches the coke. The coke is burned prior to the burning of the combustible dusts while the temperature of the combustible dusts is increasing in the melting furnace 1 if the combustible dusts without preheating are blown into the melting furnace 1. This reduces the replacement rate of the combustible dusts. As an example, the replacement rate of the combustible dusts may be reduced, for example, to about 30%.

Heating air to a temperature around the ignition temperature (about 350°C) of the combustible dusts can shorten time for the temperature of the combustible dusts to reach the ignition temperature in the melting furnace 1. Thus, the combustible dusts can be caused to ignite simultaneously with coke. In this respect, it is preferable that the temperature of the air supplied to the blower tuyere 8 be 200°C or higher. The reason therefor is that the ignition of the combustible dusts will take a long time if the preheat temperature of air is lower than 200°C.

The combustible dusts have a high content of a volatile component and a high specific surface area, and can be burned before coke is burned accordingly. This leads to increase in replacement rate of the combustible dusts.

Heating air excessively may burn combustible dusts in the blower tuyere 8 before the combustible dusts are blown into the melting furnace 1. Accordingly, it is preferable that the temperature of the air to be mixed with the combustible dusts be 400°C or lower. This allows efficient combustion of the combustible dusts in the melting furnace 1.

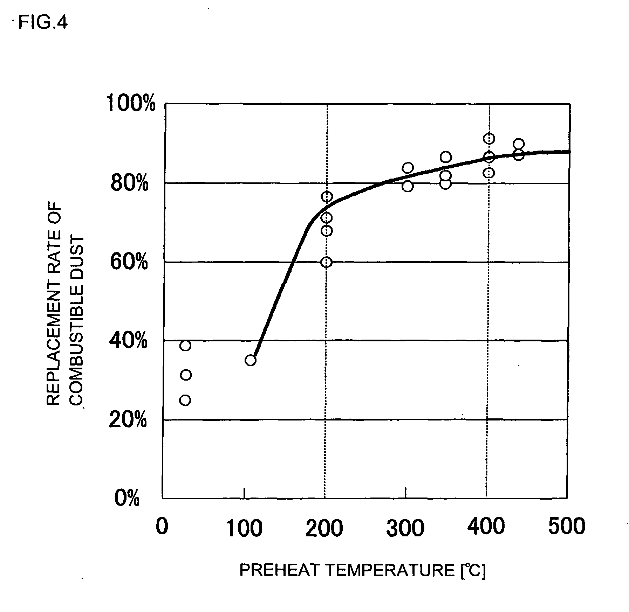

Fig. 4 is a diagram showing the relationship between the preheat temperature of air and the replacement rate of combustible dusts (result of experiment) when an experiment was conducted by changing the preheat temperature of air.

When the preheat temperature of air is lower than 200°C, the replacement rate of the combustible dusts is lowered to a level lower than 60%, making it difficult to reduce the amount of coke usage. When the preheat temperature of air is higher than 400°C, this also makes it difficult to raise the replacement rate of the combustible dusts. Accordingly, as described above, it is preferable that the preheat temperature of air be set to fall within a range of from 200 to 400°C.

It is also preferable that the flow rate of the air (containing the combustible dusts) passing through the tip end portion of the blower tuyere 8 be from 20 [m/s] or more to 200 [m/s] or less.

The preheated air is blown through the tip end portion of the blower tuyere 8 toward the coke bed. Molten slag may reach the tip end portion of the blower tuyere 8 as a result of increased level of the molten slag in the melting furnace 1. In this case, the tip end portion of the blower tuyere 8 may be closed by the molten slag if the flow rate of the preheated air is lower than 20 [m/s].

If the flow rate of preheated air is lower than 20 [m/s], this may also cause high-temperature gas in the melting furnace 1 to enter the blower tuyere 8 to cause the combustible dusts to ignite in the blower tuyere 8 when the inner pressure of the melting furnace 1 changes suddenly. Note that rapid change of the inner pressure of the melting furnace 1 is likely to occur when a waste product is fed into the melting furnace 1.

If the flow rate of the preheated air is lower than 20 [m/s], this may also form a core due to failure to send air into the central part of the melting furnace 1, resulting in a fear of unstable melting of a waste product.

Meanwhile, coke of the coke bed may be blown off by air blown in if the flow rate of the preheated air is higher than 200 [m/s]. The flow rate of the preheated air higher than 200 [m/s] may also make the inner wall surface of the blower tuyere 8 wear out easily due to the combustible' dusts.

According to the present embodiment, the preheated air that has been mixed with the combustible dusts is blown into the melting furnace 1, thereby shortening time for the temperature of the combustible dusts to reach the ignition temperature thereof. Thus, the combustion efficiency of the combustible dusts is enhanced and the replacement rate of the combustible dusts is increased, thereby reducing the amount of coke usage. Use of the preheated air can increase steam generated in the boiler 4.

Depending on the preheating condition of air, the amount of coke usage can be reduced by about 10 [kg] with respect to the weight of a waste product (1 [ton]) fed into the melting furnace 1.

The present embodiment preheats air with steam generated in the boiler 4, but the embodiment is not limited thereto. Air to be supplied to the blower tuyere 8 may be heated in advance. More specifically, a heater dedicated to heating of air to be supplied to the blower tuyere 8 may be provided.

Heat energy can be used efficiently if air is heated with heat generated in a waste melting facility as in the present embodiment. The preheat temperature of air can be set to fall within a range of from 200 to 400°C satisfactorily by using only heat generated in the waste melting facility.

Use of the heater can increase the preheat temperature of air to a temperature higher than 400°C. However, provision of the heater may increase cost, or reduce energy efficiency in the waste melting facility. In this regard, it is preferable that the preheat temperature of air is set to 400°C or lower.

The present embodiment uses dusts collected by the collecting unit 2 as combustible dusts to be blown into the melting furnace 1, but the embodiment is not limited thereto. Dusts that can take the place of coke by combustion may be used as combustible dusts. By way of example, iron powder, steel dust, powder generated in CDQ (coke dry quenching equipment), coke dust, biomass fuel powder, shredder dust, waste plastic powder, and waste tire powder may be used. Each of these dusts may be used alone, or two or more of these dusts may be used in combination.

### [Second Embodiment]

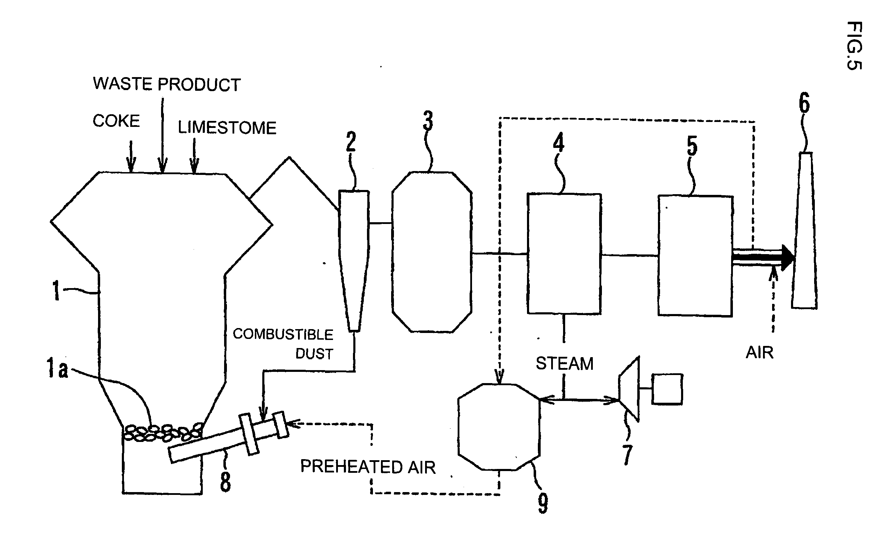

A waste melting facility of a second embodiment of the present invention will be described next with reference to Fig. 5. In Fig. 5, units and other components having the same functions as the corresponding ones described in the first embodiment are designated by the same numbers. In the below, differences from the first embodiment are mainly described.

In the present embodiment, air to be supplied to the blower tuyere 8 is preheated in two stages. First, the air is heated with the heat of the combustion exhaust gas discharged from the exhaust gas processing unit 5. A heat exchanger of a publicly known structure may be employed to realize heat exchange between the combustion exhaust gas and the air. As an example, the heat exchanger may have the same structure as that of the preheater 9.

Next, the air having been heated with the combustion exhaust gas is supplied through a duct to the preheater 9 to heat the air with the heat of steam generated in the boiler 4. The air having been heated in the preheater 9 is supplied to the blower tuyere 8, and is then blown into the melting furnace 1 together with the combustible dusts as described in the first embodiment.

The present embodiment achieves the same effect as that in the first embodiment. To be specific, the present embodiment can enhance the combustion efficiency of the combustible dusts, so that the replacement rate of the combustible dusts can be increased.

In the present embodiment, air supplied to the preheater 9 is heated with the combustion exhaust gas from the exhaust gas processing unit 5. This can reduce the amount of steam which is part of steam generated in the boiler 4 and which is to be used for preheating of air. In other words, the amount of steam to be supplied to the steam turbine 7 can be increased. As a result, power obtained from the steam turbine 7 can be increased while the preheat temperature of the air is maintained.

### [Third Embodiment]

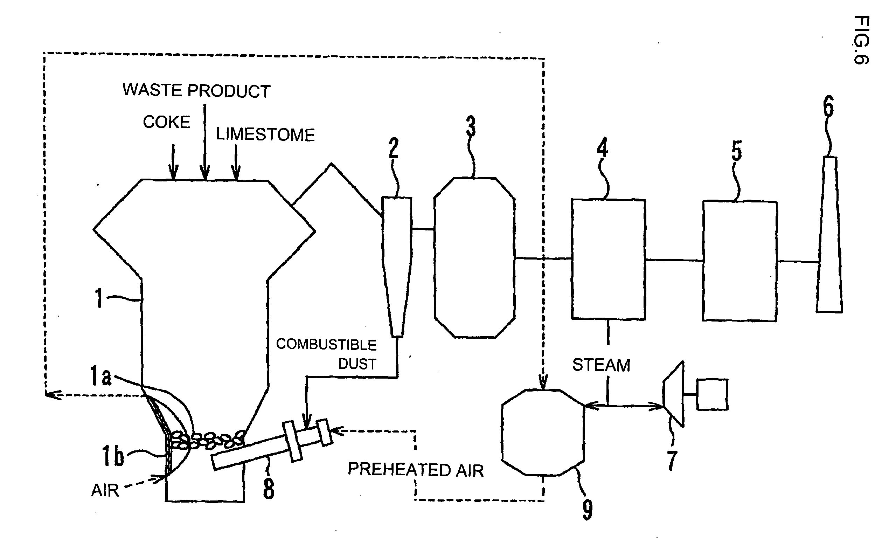

A waste melting facility of a third embodiment of the present invention will be described next with reference to Fig. 6. In Fig. 6, units and other components having the same functions as the corresponding ones described in the first embodiment are designated by the same numbers. In the below, differences from the first embodiment are mainly described.

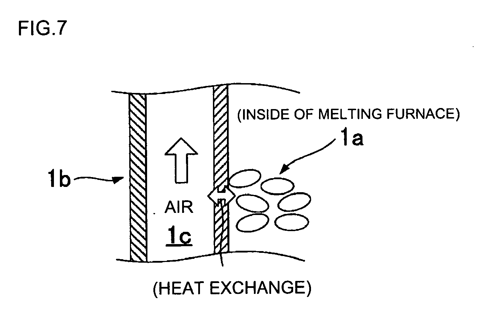

Like in the second embodiment, air to be supplied to the blower tuyere 8 is preheated in two stages in the present embodiment. First, air is heated with the heat of a furnace wall of the melting furnace 1. More specifically, a jacket structure 1b is formed on part of the furnace wall of the melting furnace 1 adjacent to the coke bed 1a. As shown in Fig.7, the jacket structure 1b has a passage 1c to allow air for preheating to pass therethrough. Heat generated inside the melting furnace 1 is applied to the air passing through the passage 1c of the jacket structure 1b to heat the air. More specifically, heat is exchanged between the passage 1c and the inside of the melting furnace 1.

Air can be preheated using the melting furnace 1 by bringing the air into contact with at least part of the outer wall surface of the melting furnace 1.

Air is supplied through a duct (not shown) to the preheater 9 to be heated again after passing through the jacket structure 1b. As described in the first embodiment, the air having been heated in the preheater 9 is supplied to the blower tuyere 8, and is blown into the melting furnace 1 together with the combustible dusts.

The present embodiment achieves the same effect as that in the first embodiment. To be specific, since the preheated air is blown into the melting furnace 1 together with the combustible dusts, the combustion efficiency of combustible dusts 1 can be enhanced. Further, in the present embodiment, the air can be heated and the temperature of the furnace wall of the melting furnace 1 can be reduced by bringing the air into contact with the furnace wall.

### [Fourth Embodiment]

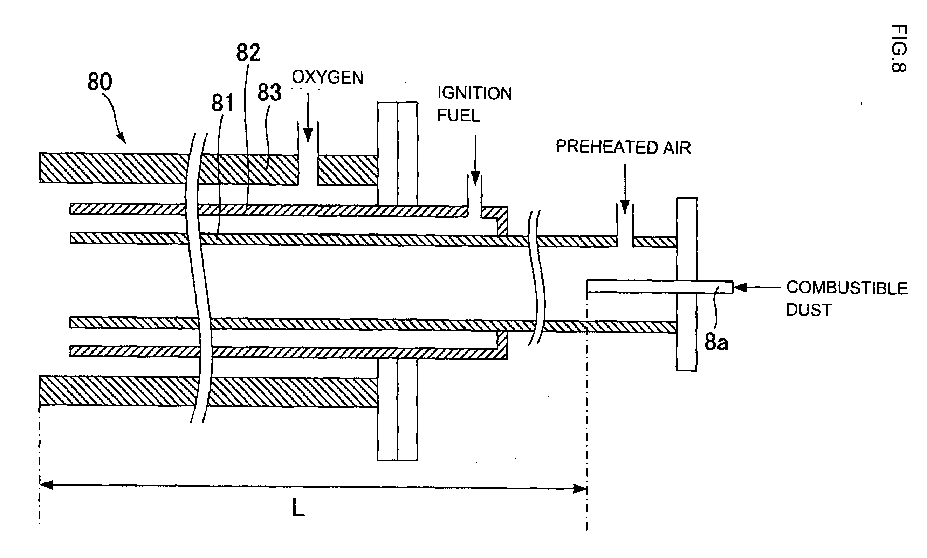

The structure of a blower tuyere of a fourth embodiment of the present invention will be described next with reference to Fig. 8. Fig. 8 is a sectional view of the blower tuyere.

The blower tuyere 80 of the present embodiment includes an inner tube 81, a middle tube 82, and an outer tube 83. The nozzle 8a described in the first embodiment is fixed to the base end portion of the inner tube 81. Combustible dusts are ejected through the tip end portion of the nozzle 8a. The base end portion of the inner tube 81 is closed.

A pipe for supply of the preheated air is connected to the inner tube 81. The preheated air and the combustible dusts are mixed with each other in the inner tube 81.

The middle tube 82 is disposed outside the inner tube 81. A space in which fuel for making combustible dusts ignite moves is formed between the outer circumference surface of the inner tube 81 and the inner circumference surface of the middle tube 82. The ignition fuel is ejected through an opening formed at the tip end portion of the middle tube 82. A pipe for supply of the ignition fuel is connected to the middle tube 82. The base end portion of the middle tube 82 is closed.

The outer tube 83 is disposed outside the middle tube 82. A space in which oxygen is allowed to move is formed between the outer circumference surface of the middle tube 82 and the inner circumference surface of the outer tube 83. Oxygen is used for combustion of the aforementioned ignition fuel. The tip end portions of the inner and middle tubes 81 and 82 are positioned inside the outer tube 83.

The present embodiment can enhance the combustion efficiency of the combustible dusts by using oxygen to burn the ignition fuel. The blower tuyere of the present embodiment can be used in the melting furnace 1 described in the first to third embodiments.

### DESCRIPTION OF REFERENCE NUMERALS

- 1:: waste melting furnace
- 1a:: coke bed
- 1b:: jacket structure
- 2:: collecting unit
- 3:: combustion chamber
- 4:: boiler
- 5:: exhaust gas processing unit
- 6:: chimney
- 7:: steam turbine
- 8:: blower tuyere
- 8a:: nozzle
- 9:: preheater
- 80:: blower tuyere
- 81:: inner tube
- 82:: middle tube
- 83:: outer tube

## Claims

1. A method for blowing a combustible dust, comprising:
blowing a preheated air and the combustible dust through a tuyere after the preheated air and the combustible dust are mixed with each other toward a coke bed in a melting furnace that melts a waste product fed into the melting furnace together with coke and limestone.

2. The method for blowing a combustible dust according to claim 1, wherein the air to be supplied to the tuyere is heated with heat generated in a waste melting facility that performs heat recovery by burning a combustible material discharged from the melting furnace.

3. The method for blowing a combustible dust according to claim 2, wherein the air to be supplied to the tuyere is heated with steam generated in a boiler during the heat recovery.

4. The method for blowing a combustible dust according to claim 2, wherein, after the air to be supplied to the tuyere is heated with a combustion exhaust gas which is generated by combustion of the combustible material and from which heat has been recovered, the air is heated with steam generated in the boiler during the heat recovery.

5. The method for blowing a combustible dust according to claim 2, wherein, after the air to be supplied to the tuyere is heated by being brought into contact with an outer wall surface of the melting furnace, the air is heated with steam generated in the boiler during the heat recovery.

6. The method for blowing a combustible dust according to any one of claims 1 to 5, wherein the air to be supplied to the tuyere is heated to a temperature in a range of from 200 to 400°C.

7. The method for blowing a combustible dust according to any one of claims 1 to 6, wherein a flow rate of the air at a tip end portion of the tuyere is set to fall within a range of from 20 to 200 [m/s].

8. The method for blowing a combustible dust according to any one of claims 1 to 7, wherein a fuel for making the combustible dust ignite and oxygen for combustion of the fuel are blown toward the coke bed together with the combustible dust and the preheated air.

9. The method for blowing a combustible dust according to any one of claims 1 to 8, wherein the combustible dust is a dust contained in a material discharged from the melting furnace.

10. A waste melting facility, comprising:
a melting furnace with a coke bed that melts a waste product fed into the melting furnace together with coke and limestone;
a tuyere through which a combustible dust and air are blown toward the coke bed after the combustible dust and the air are mixed with each other; and
preheating means for preheating the air to be supplied to the tuyere.

11. The waste melting facility according to claim 10, wherein the preheating means heats the air with steam that is generated in a boiler when heat recovery is performed by burning a combustible material discharged from the melting furnace.

12. The waste melting facility according to claim 10, wherein the preheating means includes:
a first preheating part configured to heat the air with a combustion exhaust gas which is generated by combustion of a combustible material discharged from the melting furnace and from which heat has been recovered; and
a second preheating part configured to heat the air having been heated by the first preheating part by using steam generated in a boiler during the heat recovery.

13. The waste melting facility according to claim 10, wherein the preheating means includes:
a first preheating part configured to heat the air by bringing the air into contact with an outer wall surface of the melting furnace; and
a second preheating part configured to heat the air having been heated by the first preheating part by using steam generated in a boiler when heat recovery is performed by burning a combustible material discharged from the melting furnace.

14. The waste melting facility according to any one of claims 10 to 13, wherein the preheating means heats the air to be supplied to the tuyere to a temperature in a range of from 200 to 400°C.

15. The waste melting facility according to any one of claims 10 to 14, wherein the tuyere includes:
an inner tube that forms a space in which the air and the combustible dust are allowed to move;
a middle tube disposed outside the inner tube, the middle tube forming a space, in which fuel for making the combustible dusts ignite moves, between the middle tube and the inner tube; and
an outer tube disposed outside the middle tube, the outer tube forming a space, in which oxygen for combustion of the fuel is allowed to move, between the outer tube and the middle tube.
